# EUROPEAN PATENT SPECIFICATION

(11) **EP 3 885 230 B1**
(45) Date of publication and mention of the grant of the patent: **04.01.2023**
(21) Application number: 18940762.0
(22) Date of filing: 21.11.2018
(51) Int. Cl.: B61F 5/12, B61F 5/10, B61F 3/16, B60B 37/00, B61F 5/20, B61H 13/36, B61H 5/00, B60B 17/00, B60B 37/10

(54) **BOGIE AND RAIL VEHICLE**
DREHGESTELL UND SCHIENENFAHRZEUG
BOGIE ET VÉHICULE FERROVIAIRE

(30) Priority: 19.11.2018 CN 201811374707
(43) Date of publication of application: 29.09.2021
(73) Proprietor: CRRC TANGSHAN CO., LTD., Fengrun District Tangshan Hebei 063035 (CN)
(72) Inventor: ZHAO, Feng, Tangshan, Hebei 063035 (CN); ZHANG, Lijun, Tangshan, Hebei 063035 (CN); LIU, Kun, Tangshan, Hebei 063035 (CN); LIU, Chunyang, Tangshan, Hebei 063035 (CN); CHANG, Lijun, Tangshan, Hebei 063035 (CN); WANG, Tianxun, Tangshan, Hebei 063035 (CN)
(74) Representative: Brevalex
(86) International application number: PCT/CN2018/116640
(87) International publication number: WO 2020/103016

(56) References cited:
- EP-A2- 0 181 295
- WO-A1-2018/042326
- WO-A1-2018/090492
- CN-B- 105 270 428
- CN-U- 205 113 351

## Description

### TECHNICAL FIELD

The present application relates to vehicle steering technology, and more particularly, to a bogie and a rail vehicle.

### BACKGROUND

Rail vehicles are important transportation connections connecting cities, and are gradually becoming the main means of transport in cities. The rail vehicles are also main carriers of cargo transport. At least two bogies are provided below a vehicle body of the rail vehicle to support the vehicle body and to realize travelling and steering functions.

In the related art, a bogie includes a frame, a wheel pair, and a buffer device. Two sets of wheel pairs are symmetrically arranged below each frame along a longitudinal direction, and each wheel pair includes an axle and wheels symmetrically arranged at both ends of the axle. The wheels are in contact with the rail, and drive the bogie and the vehicle body to turn under a pressing force from the rail. The buffer device is arranged between the frame and the vehicle body for reducing the vibration of the vehicle body. The above-mentioned bogie is bulky and heavy, resulting in poor flexibility during turning.

EP0181295A2 discloses a two-axled central support bogie for railway. The bogie includes two cross members carrying the wheels and articulated together by two longitudinal members, and a central longitudinal structure. The ends of the central longitudinal structure bear on two air springs carried by respective central platforms formed by the cross members. The central structure carries means for its articulated connection with the articulation ends of the vehicle bodies, and the bogie also includes tie means for connecting the central structure with one of the cross members to prevent movement in a longitudinal direction and lateral resistance means for limiting movement in a transverse direction.

WO2018090492A1 discloses a self-steering intelligent sprayer with multiple ground clearances and a control method therefor. The sprayer includes a vehicle platform, self-steering travelling mechanisms, a controllable-lift spraying device, a gasoline power generation and supply device, and a control device. The two self-steering travelling mechanisms are respectively connected to the vehicle platform by a rotation structure. The controllable-lift spraying device is fixed to the tail of the vehicle platform, and includes a sprayer lifting mechanism, a spray bar device and a mixing device, the spray bar device being arranged on the sprayer lifting mechanism and connected to the mixing device, and a spray bar being able to move up and down along with the traction of the sprayer lifting mechanism. The mixing device is fixed to the middle of the vehicle platform to provide pesticide for the spraying by the spraying device. The gasoline power generation and supply device is fixed to the front of the vehicle platform, and serves as a stable voltage power supply for the apparatus. The control device is respectively connected to a driving device, a control motor and multiple groups of sensors. For the apparatus, four wheel hub motors are controlled by the control device to realize wheel differential self-steering with high control precision and a small turning radius.

CN205113351U discloses a low-floor vehicle with axle bridge, including the axle journal, the spindle nose, mount pad and axle body. The spindle nose has two just to establish the both ends at the axle body respectively. The axle body is located between the bottom of two spindle noses. Every spindle nose is equipped with axle journal and mount pad, and the outer end at the spindle nose is established to the axle journal. The axle journal, the spindle nose, mount pad and axle body are a holistic list part. The outer terminal surface of spindle nose is equipped with the draw-in groove, the side of draw-in groove has axial card plane, contained angle alpha between the top surface of axial card plane and spindle nose is 30-80, the cross section of axle body is trapezoidal.

### SUMMARY

The invention is defined by the features of claim 1. The embodiments of the present application provide a bogie and a rail vehicle, which can improve the flexibility of the vehicle during turning.

According to the first aspect of the embodiments of the present application, a bogie is provided. The bogie includes:
an axle, a middle portion of the axle being downwardly recessed to form a receiving space, and journals being arranged symmetrically at both ends of the axle;
wheels, each of the wheels being connected to a respective one of the journals by a bearing; and
a buffer device located in the receiving space, the buffer device including:
a primary spring assembly arranged on the axle;
a secondary spring assembly arranged on a top of the primary spring assembly; and
a slewing ring arranged on a top of the secondary spring assembly and configured to be connected to a vehicle body to transmit a traction force or a braking force to the vehicle body, wherein
the axle includes:
an axle body; and
two axle heads, in which one of the two axle heads is arranged at one end of the axle body, and the other one of the two axle heads is arranged at another end of the axle body, the two axle heads and the axle body form the receiving space, and each journal is arranged on an exterior side surface of a top end of a respective one of the two axle heads, wherein.
the primary spring assembly includes:
a primary spring pallet; and
two primary elastic members, in which the two primary elastic members are symmetrically arranged at both ends of the primary spring pallet, and each of the primary elastic members is arranged between the primary spring pallet and a respective one of the axle heads for connecting the primary spring pallet and said respective one of the axle heads with each other.

According to the second aspect of the embodiments of the present application, a rail vehicle is provided, which includes the bogie as described above.

According to the technical solution provided by this embodiment, journals are arranged symmetrically at both ends of the axle, and each of the wheels is connected to a respective one of the journals by a bearing, so that the axle is stationary and the wheels rotates. Furthermore, a middle portion of the axle is downwardly recessed to form a receiving space for receiving a buffer device, which includes: a primary spring assembly arranged on the axle; a secondary spring assembly arranged on a top of the primary spring assembly; and a slewing ring arranged on a top of the secondary spring assembly and configured to be connected to a vehicle body to transmit a traction force or a braking force to the vehicle body. The bogie provided by this embodiment is provided with only one set of wheel pairs including an axle and wheels arranged at both ends of the axle, so that the basic functions of the bogie can be realized, namely, supporting, travelling and steering functions. Compared with the conventional bogies, the bogie provided by this embodiment has a smaller turning radius, and has a greater advantage in the curve negotiating ability, especially in the application of urban rail transit, thereby reducing the difficulty in the layout of the rail line. Moreover, the buffer device is arranged in the receiving space formed by the axle, thereby facilitating the increase of the height of the floor of the vehicle body, and the increase of the space in the vehicle body.

### BRIEF DESCRIPTION OF THE DRAWINGS

The accompanying drawings described here are used for providing further understanding of the present application and constitute a part of the present application Schematic embodiments of the present application and description thereof are used for illustrating the present application and not intended to form an improper limit of the present application. In the accompanying drawings:
FIG. 1 is a schematic diagram of a bogie according to the first embodiment of the present application;
FIG. 2 is an exploded view showing the connection between a wheel and an axle of the bogie according to the first embodiment of the present application;
FIG. 3 is a schematic diagram of an axle of a bogie according to the second embodiment of the present application;
FIG. 4 is a schematic diagram of the bogie according to the second embodiment of the present application;
FIG. 5 is an exploded view showing the connection between an axle and a buffer device according to the fourth embodiment of the present application;
FIG. 6 is a schematic diagram of a primary spring pallet according to the fourth embodiment of the present application;
FIG. 7 is a schematic diagram of a secondary spring pallet according to the fourth embodiment of the present application; and
FIG. 8 is a partial cross-sectional view showing the assembly of the secondary spring pallet and an axle head according to the fourth embodiment of the present application.

### Reference numerals:

1-axle; 11-journal; 12-axle body; 121-axle body connecting part; 13-axle head; 131-axle head connecting part; 132-primary spring mounting seat; 133-secondary spring mounting seat; 1331-elongate hole;
2-wheel; 21-hub;
3-buffer device; 31-primary spring pallet; 311-first mounting hole; 32-primary elastic member; 321-primary spring mounting part; 33-secondary spring pallet; 331-second mounting hole; 332-guiding block; 333-guiding clip; 3331-clamping part; 34-secondary elastic member; 35-slewing ring; 351-receiving hole; 352-blocking ring;
4-bearing;
5-driving means;
6-braking disc; 61-disc body; 62-disc body connecting member; 63-disc body mounting part;
7-vehicle body; 71-traction block.

### DETAILED DESCRIPTION

In order to make the technical solutions and advantages in embodiments of the present application clearer, the exemplary embodiments in the present application are further elaborated below in combination with the accompanying drawings. It is apparent that the described embodiments are only a part of the embodiments of the present application but not all. It is to be noted that the embodiments in the present application and the characteristics in the embodiments may be combined under the condition of no conflicts.

### First Embodiment

This embodiment provides a bogie that can be used in a rail vehicle. The bogie has relatively high flexibility during turning, and the height of the floor of the vehicle body above the bogie may be reduced, thereby increasing the space inside the vehicle body.

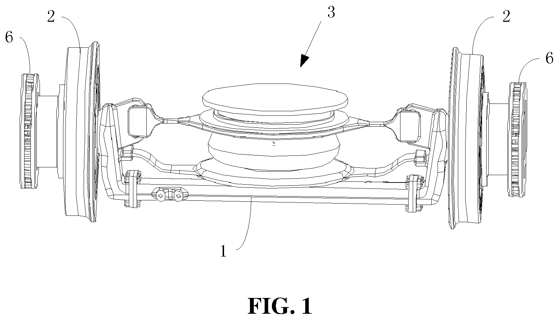

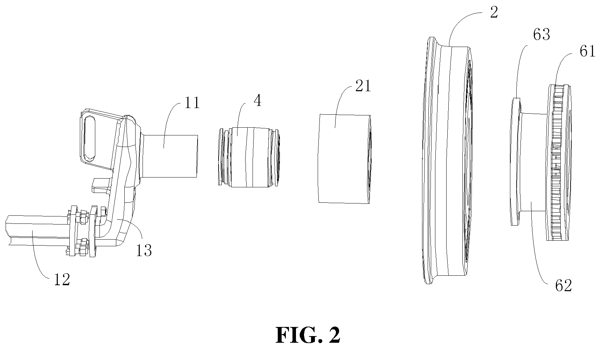

FIG. 1 is a schematic diagram of a bogie according to the first embodiment of the present application, and FIG. 2 is an exploded view showing the connection between a wheel and an axle of the bogie according to the first embodiment of the present application. As shown in FIGS. 1 and 2, the bogie provided by this embodiment includes an axle 1, wheels 2, and a buffer device 3. Herein, each of both ends of the axle 1 is provided with a journal 11, and each of the wheels 2 is connected to a respective one of the journals 11 by a bearing 4. That is, both the axle 1 and the journal 11 are stationary, and each of the wheels 2 may rotate relative to the respective journal 11.

A middle portion of the axle 1 is downwardly recessed to form a receiving space in which the buffer device 3 is received, and a top of the buffer device 3 is configured to be connected to the vehicle body. The buffer device 3 can bear the weight of the vehicle body and buffer the vibration of the wheels 2, so as to prevent a large vibration amount from being transferred to the vehicle body.

The buffer device 3 includes a primary spring assembly, a secondary spring assembly, and a slewing ring. Herein, the primary spring assembly is arranged on the axle 1, and the secondary spring assembly is arranged on a top of the primary spring assembly. The slewing ring is arranged on a top of the secondary spring assembly and configured to be connected to the vehicle body to transmit a traction force or a braking force to the vehicle body. The top of the buffer device 3 is lower than a top end of each wheel 2, so that the buffer device 3 does not affect the structure of the vehicle body, and it is not necessary to increase the height of the floor of the vehicle body, thereby increasing the space inside the vehicle body. Moreover, the vibration is buffered and dampened twice through the primary spring assembly and the secondary spring assembly, so that the vibration amount transferred from the wheel/rail to the vehicle body is reduced, thereby improving the comfort of the passengers.

In the conventional bogie, the frame is provided with two sets of wheel pairs, including four wheels, so that the bogie has a relatively large turning radius, which brings certain difficulty in the layout of the rail line. However, according to the technical solution provided by this embodiment, the bogie provided by this embodiment is provided with only one set of wheel pairs including an axle 1 and wheels 2 arranged at both ends of the axle 1, so that the basic functions of the bogie can be realized, namely, supporting, travelling and steering functions. Compared with the conventional bogie, the bogie provided by this embodiment has a smaller turning radius, and has a greater advantage in the curve negotiating ability, especially in the application of urban rail transit, thereby reducing the difficulty in the layout of the rail line.

Furthermore, in the bogie having one set of wheel pairs provided by this embodiment, on the one hand, the number of wheels and axles is reduced, and the overall weight of the bogie is greatly reduced, so that the weight of the rail vehicle and the energy consumption can be reduced. On the other hand, the number of wheels is reduced by a multiple, so that the number of the wheel/rail contact points is greatly reduced, thereby reducing the input of vibration and the input of noise, and improving the stability of the vehicle body and the comfort. Further, it is also possible to reduce the damage to the rail caused by wheel/rail friction. In still another aspect, a bogie having one set of wheel pairs has a simpler structure, and is easier to be installed and maintained, thereby increasing the production efficiency.

### Second Embodiment

On the basis of the above-mentioned embodiment, in this embodiment, the implementation of the bogie is optimized, and in particular, the implementation of the axle 1 is further optimized.

The middle portion of the axle 1 is downwardly recessed to form a receiving space for receiving the buffer device 3, so that the vertical height of the buffer device 3 can be reduced, thereby reducing the height of the floor of the vehicle body.

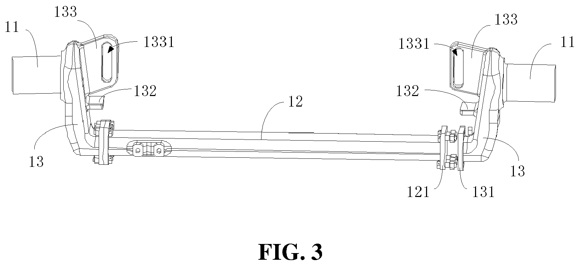

Specifically, FIG. 3 is a schematic diagram of an axle of a bogie according to the second embodiment of the present application. As shown in FIGS. 1 to 3, the axle 1 includes an axle body 12 and axle heads 13. Herein, the number of the axle heads 13 is two, and one of the two axle heads 13 is arranged at one end of the axle body 12 and the other one of the two axle heads 13 is arranged at another end of the axle body 12. The vertical height of the axle body 12 is relatively low, each axle head 13 extends generally along the vertical direction, and a bottom end of each axle head 13 is connected to the axle body 12. The exterior side surface of the top end of each axle head 13 is provided with a respective one of the above-mentioned journals 11. That is, the axial height of each journal 11 is higher than the vertical height of the axle body 12. The axle body 12 and the axle heads 13 at both ends of the axle body 12 form a receiving space in which the buffer device 3 is received.

The axle body 12 may be integral with the axle heads 13. Alternatively, the axle body 12 and each axle head 13 may be two separate components, which are connected with each other through welding, screwing, etc. In this embodiment, an axle head connecting part 131 is provided at the bottom end of each axle head 13, and an axle body connecting part 121 is provided at each end of the axle body 12 correspondingly. In this case, the axle head connecting part 131 is aligned with the axle body connecting part 121, and is connected to the axle body connecting part through a bolt.

In FIG. 2, each wheel 2 is provided with a hub 21 fixed to each wheel 2. The hub 21 is fit with an outer ring of the bearing 4 by means of clearance fitting, and the hub 21 is provided with a bearing retainer ring (not shown). An inner ring of the bearing 4 is fit with the journal 11 by means of interference fitting, so that the assembly between the wheels 2 and the axle 1 can be realized.

The journal 11 may be integral with the axle head 13, or may be connected to the axle head 13 by means of interference fitting.

The above-mentioned bogie may be used as a trailer bogie (also referred to as a non-powered bogie). That is, there is no driving device on the bogie, and the wheels of the bogie roll along with the movement of the vehicle body.

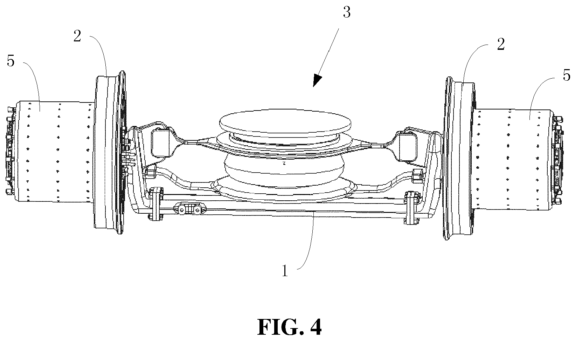

Alternatively, FIG. 4 is a schematic diagram of a bogie according to the second embodiment of the present application. As shown in FIG. 4, the bogie is provided with driving devices 5 connected to the wheels 2 for driving the wheels 2 into rotation, so that the bogie may serve as a powered bogie.

Specifically, each driving device 5 includes a driving motor and a speed reducer, and a housing of the driving motor can be mounted on the axle 1. One end of the speed reducer is connected to an output end of the driving motor, and another end of the speed reducer is connected to one of the wheels 2. The driving motor and the speed reducer may be integrated in a housing.

The connection between the speed reducer and one of the wheels 2 may be realized in many ways. For example, the output end of the speed reducer is connected to the wheel 2 by means of a connecting shaft. For example, the connecting shaft can be connected to the shaft hole of the wheel 2 by means of interference fitting, or by means of key fitting or spline fitting. Alternatively, a hub 21 is provided in the shaft hole of the wheel 2, and the connecting shaft is connected to the hub 21 by means of interference fitting or key fitting.

### Third Embodiment

On the basis of the above-mentioned embodiment, in this embodiment, the implementation of the bogie is optimized, and in particular, the manner for braking is further optimized.

For the trailer bogie, a braking device may be used to brake the wheel 2. There are many manners for braking. For example, a braking clamp is used to press against the disk of the wheel 2 from both sides of the wheel to realize braking, or a braking shoe is used to press against the tread of the wheel 2 to realize braking. Alternatively, the following implementations may also be adopted.

As shown in FIGS. 1 and 2, the braking device includes a braking disc 6 and a braking clamp (not shown). The braking clamp can be mounted on the axle 1 by means of a mounting seat. Herein, the braking disc 6 is connected to the wheel 2 to rotate simultaneously with the wheel 2. The braking clamp is used to clamp the disc surface of the braking disc 6 from both sides of the braking disc during braking to prevent the braking disc 6 from rotating. The braking clamp can adopt an implementation known in the related art, which is not described in detail in this embodiment.

There are many manners for connecting the braking disc 6 and the wheel 2 with each other. For example, the braking disc 6 is connected to the wheel 2 through a connecting shaft by means of interference fitting, or by means of a bolt connection. This embodiment provides a specific implementation.

The braking disc 6 includes a braking disc body 61 and a disc body connecting member 62. Herein, one end of the disc body connecting member 62 in the axial direction is connected to the braking disc body 61, and another end of the disc body connecting member 62 is connected to the disk of the wheel 2 by means of a bolt connection. Specifically, the disc body connecting member 62 may also be provided on the exterior side of the hub 21 to fit with the hub 21 by means of interference fitting. The end of the disc body connecting member 62 facing toward the wheel 2 extends outwardly along the radial direction to form a disc body mounting part 63. Bolt holes are provided on the disc body mounting part 63, so that the disc body mounting part 63 can be connected to the disk of the wheel 2 through bolts.

The powered bogie provided with the driving device may adopt a tread braking manner, or a braking manner by reversing the driving motor.

The number of the above-mentioned braking devices is two. The two braking devices are symmetrically arranged at both ends of the bogie.

### Fourth Embodiment

On the basis of the above-mentioned embodiment, in this embodiment, the implementation of the bogie is optimized, and in particular, the implementation of the buffer device 3 is further optimized.

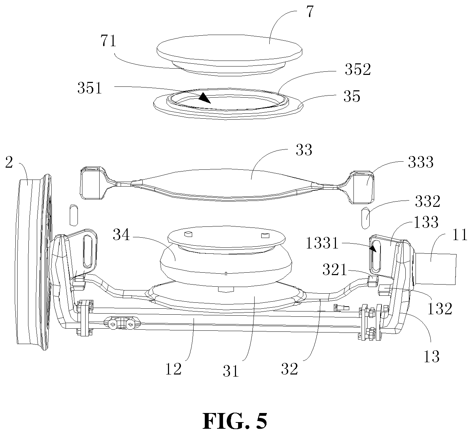

FIG. 5 is an exploded view showing the connection between an axle and a buffer device according to the fourth embodiment of the present application. As shown in FIGS. 1 and 5, the above-mentioned primary spring assembly specifically includes the primary spring pallet 31 and the primary elastic members 32. Herein, the number of the primary elastic members 32 is two, and the two primary elastic members 32 are symmetrically arranged at both ends of the primary spring pallet 31. Each of the primary elastic members 32 is arranged between the primary spring pallet 31 and a respective one of the axle heads 13 for connecting the primary spring pallet 31 and said respective one of the axle heads 13 with each other. That is, the primary spring pallet 31 is suspended above the axle body 12, and each end of the primary spring pallet 31 is connected to a respective one of the axle heads 13 by a respective one of the primary elastic members 32, so that the stress applied to the axle body 12 is more uniform, and stress concentration is weakened.

Specifically, the elastic force of the primary elastic members 32 can buffer the vibration of the axle 1, thereby preventing the primary spring pallet 31 from generating a large vibration.

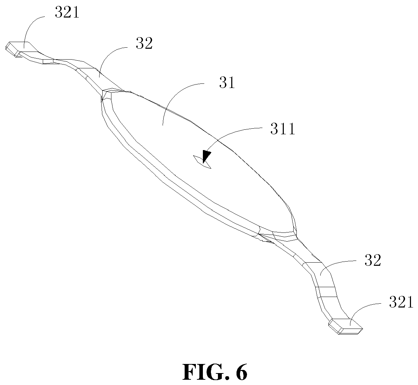

FIG. 6 is a schematic diagram of a primary spring pallet according to the fourth embodiment of the present application. As shown in FIG. 6, each primary elastic member 32 is a structure that may be elastically deformed, for example, a plate-like structure made of a steel-carbon fiber composite material. One end of each primary elastic member is connected to the primary spring pallet 31, and another end of the primary elastic member is connected to the axle head 13. The primary elastic members 32 may be bent and deformed when they are subjected to a force, and may be restored to their original state when the force disappears. When the axle 1 vibrates up and down to drive the end of each primary elastic member 32 connected to the axle 1 into up and down movement, the primary elastic members 32 are deformed to accumulate the elastic potential energy, so that the vibration amount is buffered, and the vibration of the primary spring pallet 31 is reduced.

For the connection between the primary elastic members 32 and the axle heads 13, for example, the following manners may be adopted.

As shown in FIGS. 3 and 5, an interior side surface of each axle head 13 is provided with a primary spring mounting seat 132. An end of the primary elastic member 32 facing toward the axle head 13 is provided with a primary spring mounting part 321. The primary spring mounting part 321 is connected to the primary spring mounting seat 132 by means of welding, screwing, etc.

Furthermore, as shown in FIG. 5, each primary elastic member 32 is not a planar structure, but a bent stepped structure. That is, a vertical mounting height of the end of each primary elastic member 32 for connecting to the primary spring pallet 31 is lower than a vertical mounting height of the end of each primary elastic member 32 for connecting to the axle head 13, so that the vertical height of the primary spring pallet 31 is lower than the vertical height of the primary spring mounting seat 132.

The two primary elastic members 32 described above are symmetrically arranged, and each of them is connected to the axle head 13 in the same manner.

In addition to the above-mentioned solution, the primary spring assembly may also be implemented in other ways. For example, each end of the primary spring pallet 31 extends to the axle head 13. Each primary spring member 32 is arranged between the primary spring pallet 31 and the primary spring mounting seat 132 for connecting the primary spring pallet 31 and the primary spring mounting seat 132 with each other through a spring. The primary spring members 32 may be elastically deformed in the vertical direction, and may also buffer the vibration of the axle 1.

This embodiment also provides a specific implementation of the secondary spring assembly. Those skilled in the art may directly adopt the technical solution provided in this embodiment, or may make appropriate modifications on the basis of the technical solution provided in this embodiment, so as to adapt the secondary spring assembly to vehicle bodies with different structures or carrying capacities.

As shown in FIG. 5, the secondary spring assembly includes a secondary spring pallet 33 and a secondary elastic member 34. Herein, the secondary spring pallet 33 is positioned above the axle body 12, and each of two ends of the secondary spring pallet 33 are connected to a respective one of the two axle heads 13. The secondary elastic member 34 is arranged between the secondary spring pallet 33 and the primary spring pallet 31. A slewing ring 35 is arranged on the top of the secondary spring pallet 33.

The elastic force of the secondary elastic member 34 can buffer the vibration of the primary spring assembly, thereby further reducing the vibration amount of the vehicle body.

The secondary elastic member 34 may be a rubber buffering member, an air spring, etc. In this embodiment, an air spring is used as the secondary elastic member 34. One end of the air spring along a center line of the air spring is connected to the primary spring pallet 31, and another end of the air spring along the center line of the air spring is connected to the secondary spring pallet 33.

Specifically, as shown in FIG. 6, a first mounting hole 311 is formed in the primary spring pallet 31. The bottom of the air spring is provided with a mounting structure which can be received in the first mounting hole 311. During assembly, the mounting structure at the bottom of the air spring is inserted into the first mounting hole 311. The first mounting hole 311 may prevent the air spring from moving transversally.

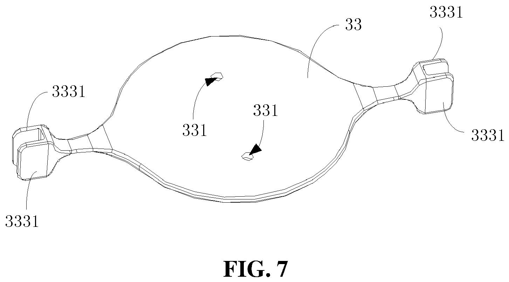

FIG. 7 is a schematic diagram of a secondary spring pallet according to the fourth embodiment of the present application. As shown in FIG. 7, the secondary spring pallet 33 is provided with two second mounting holes 331. The top of the air spring is provided with mounting structures which can be received in the second mounting holes 311. During assembly, each mounting structure at the top of the air spring is inserted into each second mounting hole 311. The second mounting holes 311 may prevent the air spring from moving transversally.

Further, the secondary spring pallet 33 may also move in the vertical direction with respect to the axle 1, so that when the axle 1 moves up and down, the secondary spring pallet 33 is not driven into up and down movement, thereby further reducing the vibration of the vehicle body.

The movement of the secondary spring pallet 33 in the vertical direction may be realized in many ways. For example, as shown in FIGS. 3 and 5, the interior side surface of each axle head 13 is provided with a secondary spring mounting seat 133, and the secondary spring mounting seat 133 is located above the primary spring mounting seat 132. Correspondingly, two secondary spring mounting parts are symmetrically arranged at both ends of the secondary spring pallet 33. Each of the two secondary spring mounting parts is connected to a respective one of the two secondary spring mounting seats 133 and is movable along the vertical direction with respect to said respective one of the secondary spring mounting seats 133.

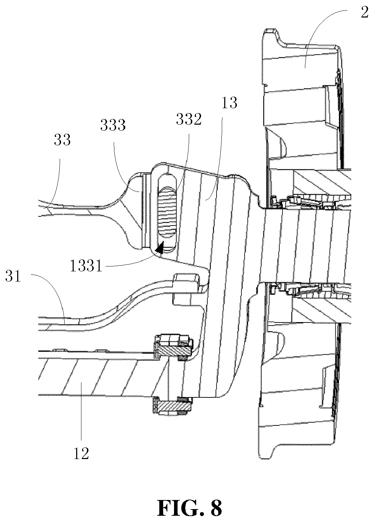

Specifically, FIG. 8 is a partial cross-sectional view showing the assembly of a secondary spring pallet and an axle head according to the fourth embodiment of the present application. As shown in FIGS. 5, 7, and 8, each secondary spring mounting seat 133 is provided with an elongate hole 1331 extending along the vertical direction. Each secondary spring mounting part includes a guiding block 332 and a guiding clip 333. Herein, the guiding block 332 may be received in the elongate hole 1331 and may be movable along the vertical direction in the elongate hole 1331. One end of the guiding clip 333 is connected to the secondary spring pallet 33, and another end of the guiding clip 333 branches off into two clamping parts 3331. The distance between the two clamping parts 3331 is larger than the thickness of the secondary spring mounting seat 133. One of the two clamping parts 3331 is connected to the guiding block 332 at one side of the guiding block 332, and the other one of the two clamping parts 3331 is connected to the guiding block 332 at another side of the guiding block 332. By the above-mentioned assembly manner, the secondary spring pallet 33 may be connected to the axle heads 13 and may be movable in the vertical direction with respect to the axle heads 13.

The clamping part 3331 and the guiding block 332 may be fixed to each other by means of welding, or by means of bolt connection. Alternatively, two receiving grooves may be symmetrically formed in the two clamping parts 3331. The shape and dimension of each receiving groove are matched with those of the guiding block 331, and both sides of the guiding block 331 are received in a respective one of the receiving grooves. The distance between the bottom surfaces of the two receiving grooves is approximately equal to the thickness of the guiding block, so that the two clamping parts 3331 may restrain the guiding block 331 in the elongate hole 1331.

In addition to the above-mentioned solution, the connection between the secondary spring pallet 33 and the axle heads 13 may also be realized by means of sliding block and sliding rail fitting, sliding block and sliding groove fitting, etc., as long as the secondary spring pallet 33 may be movable in the vertical direction with respect to the axle heads 13.

When the vehicle body is assembled above the bogie, the weight of the vehicle body is loaded onto the secondary spring pallet 33, so that the secondary spring pallet 33 moves downwardly. The weight of the vehicle body is distributed to the secondary elastic members 34 through the secondary spring pallet 33. The secondary elastic members 34 then buffer and dampen the vibration of the axle 1, thereby reducing the vibration of the vehicle body.

Furthermore, the wheels 2 are elastic wheels, so that the vibration and impact transmitted from the wheel/rail may be isolated and alleviated, thereby reducing the noise generated by the wheel/rail impact.

On the basis of the above-mentioned technical solution, if an air spring is used as the secondary elastic member 34, the axle body 12 may be further designed as a hollow structure, serving as an additional air chamber of the air spring. Specifically, the cavity in the middle portion of the axle body 12 is used as a gas chamber, and the top of the axle body 12 is provided with a venting hole communicating with the gas chamber. Correspondingly, the bottom of the air spring is provided with a venting line communicating with an inner cavity of the air spring, and the venting line communicates with the venting hole by passing downwardly through the primary spring pallet 31. The gas chamber of the axle body 12 communicates with the inner cavity of the air spring, so that the axle body 12 can be used as an additional air chamber to adjust the pressure of the air spring.

The implementation of the slewing ring 35 may be realized in many ways. This embodiment provides a specific implementation. As shown in FIG. 5, the slewing ring 35 is provided with a receiving hole 351, and the bottom surface of the vehicle body 7 is provided with a traction block 71, which can be inserted into the receiving hole 351. When the bogie moves longitudinally, a traction force is applied to the traction block 71 through the slewing ring 35, thereby driving the vehicle body into longitudinal movement.

Furthermore, a top surface of the slewing ring 35 is further provided with a blocking ring 352 coaxial with the receiving hole 351, and an inner diameter of the blocking ring 352 is equal to a diameter of the receiving hole 351. The blocking ring 352 protrudes from the top surface of the slewing ring 35. That is, the limit height of the traction block 71 is increased in the vertical direction, so as to avoid the traction block 71 from escaping from the slewing ring 35. The traction block 7 and the slewing ring 35 may rotate relative to each other, so that the vehicle may turn smoothly.

### Fifth Embodiment

This embodiment provides a rail vehicle, which includes a bogie provided in any one of the above embodiments.

According to the technical solution provided by this embodiment, journals are arranged symmetrically at both ends of the axle, and each of the wheels is connected to a respective one of the journals by a bearing, so that the axle is stationary and the wheels rotates. Furthermore, a buffer device is provided in the middle portion of the axle, and the top of the buffer device is configured to be connected to the vehicle body, so that the vibration of the bogie may be buffered. The bogie provided by this embodiment is provided with only one set of wheel pairs including an axle and wheels arranged at both ends of the axle, so that the basic functions of the bogie can be realized, namely, supporting, travelling and steering functions. Compared with the conventional bogies, the bogie provided by this embodiment has a smaller turning radius, and has a greater advantage in the curve negotiating ability, especially in the application of urban rail transit, thereby reducing the difficulty in the layout of the rail line.

Furthermore, in the bogie having one set of wheel pairs provided by this embodiment, on the one hand, the number of wheels and axles is reduced, and the overall weight of the bogie is greatly reduced, so that the weight of the rail vehicle and the energy consumption can be reduced. On the other hand, the number of wheels is reduced by a multiple, so that the number of the wheel/rail contact points is greatly reduced, thereby reducing the input of vibration and the input of noise, and improving the stability of the vehicle body and the comfort. Further, it is also possible to reduce the damage to the rail caused by wheel/rail friction. In still another aspect, a bogie having one set of wheel pairs has a simpler structure, and is easier to be installed and maintained, thereby increasing the production efficiency.

In the description of the present application, it is to be understood that orientation or position relationships indicated by terms "center", "longitudinal", "transverse", "length", "width", "thickness", "upper", "lower", "front", "back", "left", "right", "vertical", "horizontal", "top", "bottom", "inner", "outer" and the like are orientation or position relationships shown in the drawings, are adopted not to indicate or imply that indicated devices or components must be in specific orientations and structured and operated in specific orientations but only to conveniently describe the present application and simplify the description, and are not to be construed as limiting the present application.

In addition, terms "first" and "second" are only adopted for description and should not be understood to indicate or imply relative importance or to implicitly indicate the number of indicated technical features. Therefore, a feature defined by "first" and "second" may indicate explicitly or implicitly inclusion of one or more such features. In the description of the present application, "multiple" means at least two, for example, two and three, unless otherwise limited definitely and specifically.

In the present application, unless otherwise definitely specified and limited, terms "mount", "mutually connect", "connect", "fix" and the like should be broadly understood. For example, the terms may refer to fixed connection and may also refer to detachable connection or integrated connection. The terms may refer to mechanical connection, electrical connection or mutual communication. The terms may refer to direct mutual connection, may also refer to indirect connection through a medium and may refer to communication in two components or an interaction relationship of the two components, unless otherwise definitely limited. For those of ordinary skill in the art, specific meanings of these terms in the present application can be understood according to a specific condition.

Although some of the alternative embodiments of the present application have been described, other changes and modifications may be made by those skilled in the art to these embodiments once they have known the basic inventive concepts. Therefore, the appended claims include the some of the alternative embodiments described above and all changes and modifications that fall within the scope of the present application.

It is apparent that those skilled in the art may make various modifications and changes to the present application without departing from departing from scope of the claims.

## Claims

1. A bogie, comprising:
an axle (1), wherein a middle portion of the axle (1) is downwardly recessed to form an receiving space, and journals (11) are arranged symmetrically at both ends of the axle (1);
wheels (2), wherein each of the wheels (2) is connected to a respective one of the journals (11) by a bearing (4); and
a buffer device (3) located in the receiving space, wherein the buffer device (3) comprises:
a primary spring assembly arranged on the axle (1);
a secondary spring assembly arranged on a top of the primary spring assembly; and
a slewing ring (35) arranged on a top of the secondary spring assembly and configured to be connected to a vehicle body (7) to transmit a traction force or a braking force to the vehicle body (7),
wherein the axle (1) comprises:
an axle body (12); and
two axle heads (13), wherein one of the two axle heads (13) is arranged at one end of the axle body (12), and the other one of the two axle heads (13) is arranged at another end of the axle body (12), the two axle heads (13) and the axle body (12) form the receiving space, and each journal (11) is arranged on an exterior side surface of a top end of a respective one of the two axle heads (13),
wherein the primary spring assembly comprises:
a primary spring pallet (31); and
two primary elastic members (32), wherein the two primary elastic members (32) are symmetrically arranged at both ends of the primary spring pallet (31), and each of the primary elastic members (32) is arranged between the primary spring pallet (31) and a respective one of the axle heads (13) for connecting the primary spring pallet (31) and said respective one of the axle heads (13) with each other.

2. The bogie of claim 1, wherein an interior side surface of each axle head (13) is provided with a primary spring mounting seat (132), and
wherein an end of each primary elastic member (32) facing toward said axle head (13) is provided with a primary spring mounting part (321), and the primary spring mounting part (321) is connected to the primary spring mounting seat (132).

3. The bogie of claim 1 or 2, wherein a vertical mounting height of an end of each primary elastic member (32) for connecting to the primary spring pallet (31) is lower than a vertical mounting height of an end of each primary elastic member (32) for connecting to said axle head (13).

4. The bogie of claim 1, wherein the secondary spring assembly comprises:
a secondary spring pallet (33), wherein each of two ends of the secondary spring pallet (33) is connected to a respective one of the axle heads (13);
a secondary elastic member (34) arranged between the secondary spring pallet (33) and the primary spring pallet (31).

5. The bogie of claim 4, wherein an interior side surface of each axle head (13) is provided with a secondary spring mounting seat (133), and
wherein two secondary spring mounting parts are symmetrically arranged at both ends of the secondary spring pallet (33), and each of the two secondary spring mounting parts is connected to a respective one of the secondary spring mounting seats (133) and is movable along a vertical direction with respect to said respective one of the secondary spring mounting seats (133).

6. The bogie of claim 5, wherein each of the secondary spring mounting seats (133) is provided with an elongate hole (1331) extending along the vertical direction, and
wherein each of the secondary spring mounting parts comprises:
a guiding block (332), wherein the guiding block (332) is received in the elongate hole (1331) and is movable along the vertical direction in the elongate hole (1331); and
a guiding clip (333), wherein the guiding clip (333) is provided with two clamping parts (3331), one of the two clamping parts (3331) is connected to the guiding block (332) at one side of the guiding block (332), and the other one of the two clamping parts (3331) is connected to the guiding block (332) at another side of the guiding block (332).

7. The bogie of any one of claims 4 to 6, wherein the secondary elastic member (34) is an air spring.

8. The bogie of claim 7, wherein the axle body (12) is provided with a gas chamber, and a top of the axle body (12) is provided with a venting hole communicating with the gas chamber; and
wherein a bottom of the air spring is provided with a venting line communicating with an inner cavity of the air spring, and the venting line communicates with the venting hole by passing through the primary spring pallet (31).

9. The bogie of any one of claims 1 to 8, wherein the slewing ring (35) is provided with a receiving hole (351) for receiving a traction block (71) arranged at a bottom of the vehicle body (7), a top surface of the slewing ring (35) is provided with a blocking ring (352) coaxial with the receiving hole (351), and an inner diameter of the blocking ring (352) is equal to a diameter of the receiving hole (351).

10. A rail vehicle, **characterized in that** the rail vehicle comprises a bogie according to any one of claims 1 to 9.

## Patentansprüche

1. Drehgestell, umfassend:
eine Achse (1), wobei ein mittlerer Abschnitt der Achse (1) nach unten vertieft ist, um einen Aufnahmeraum auszubilden, und Zapfen (11) symmetrisch an beiden Enden der Achse (1) angeordnet sind;
Räder (2), wobei jedes der Räder (2) mit einem jeweiligen der Zapfen (11) durch ein Lager (4) verbunden ist; und
eine Puffervorrichtung (3), die sich in dem Aufnahmeraum befindet, wobei die Puffervorrichtung (3) Folgendes umfasst:
eine primäre Federanordnung, die an der Achse (1) angeordnet ist;
eine sekundäre Federanordnung, die an einer Oberseite der primären Federanordnung angeordnet ist; und
einen Drehkranz (35), der an einer Oberseite der sekundären Federanordnung angeordnet und konfiguriert ist, mit einem Fahrzeugkörper (7) verbunden zu werden, um eine Zugkraft oder eine Bremskraft auf den Fahrzeugkörper (7) zu übertragen,
wobei die Achse (1) Folgendes umfasst:
einen Achskörper (12); und
zwei Achsköpfe (13), wobei einer der zwei Achsköpfe (13) an einem Ende des Achskörpers (12) angeordnet ist, und der andere der zwei Achsköpfe (13) an einem anderen Ende des Achskörpers (12) angeordnet ist, die zwei Achsköpfe (13) und der Achskörper (12) den Aufnahmeraum bilden und jeder Zapfen (11) an einer äußeren Seitenoberfläche an einem oberen Ende eines jeweiligen der zwei Achsköpfe (13) angeordnet ist,
wobei die primäre Federanordnung Folgendes umfasst:
einen primären Federteller (31); und
zwei primäre elastische Elemente (32), wobei die zwei primären elastischen Elemente (32) symmetrisch an beiden Enden des primären Federtellers (31) angeordnet sind, und jedes der primären elastischen Elemente (32) zwischen dem primären Federteller (31) und einem jeweiligen der Achsköpfe (13) zum Verbinden des primären Federtellers (31) und des jeweiligen der Achsköpfe (13) miteinander angeordnet ist.

2. Drehgestell nach Anspruch 1, wobei eine innere Seitenoberfläche jedes Achskopfs (13) mit einem primären Federmontagesitz (132) versehen ist, und
wobei ein Ende jedes primären elastischen Elements (32), das in Richtung des Achskopfs (13) zeigt, mit einem primären Federmontageteil (321) versehen ist, und das primäre Federmontageteil (321) mit dem primären Federmontagesitz (132) verbunden ist.

3. Drehgestell nach Anspruch 1 oder 2, wobei eine vertikale Montagehöhe eines Endes jedes primären elastischen Elements (32) zum Verbinden mit dem primären Federteller (31) niedriger ist als eine vertikale Montagehöhe eines Endes jedes primären elastischen Elements (32) zum Verbinden mit dem Achskopf (13).

4. Drehgestell nach Anspruch 1, wobei die sekundäre Federanordnung Folgendes umfasst:
einen sekundären Federteller (33), wobei jedes der zwei Enden des sekundären Federtellers (33) mit einem jeweiligen der Achsköpfe (13) verbunden ist;
ein sekundäres elastisches Element (34) zwischen dem sekundären Federteller (33) und dem primären Federteller (31) angeordnet ist.

5. Drehgestell nach Anspruch 4, wobei eine innere Seitenoberfläche jedes Achskopfs (13) mit einem sekundären Federmontagesitz (133) versehen ist, und
wobei zwei sekundäre Federmontageteile symmetrisch an beiden Enden des sekundären Federtellers (33) angeordnet sind, und jedes der zwei sekundären Federmontageteile mit einem jeweiligen der sekundären Federmontagesitze (133) verbunden ist und entlang einer vertikalen Richtung in Bezug auf den jeweiligen der sekundären Federmontagesitze (133) bewegt werden kann.

6. Drehgestell nach Anspruch 5, wobei jeder der sekundären Federmontagesitze (133) mit einem länglichen Loch (1331), das sich entlang der vertikalen Richtung erstreckt, versehen ist, und
wobei jedes der sekundären Federmontageteile Folgendes umfasst:
einen Führungsblock (332), wobei der Führungsblock (332) in dem länglichen Loch (1331) aufgenommen wird und entlang der vertikalen Richtung in das längliche Loch (1331) bewegt werden kann; und
eine Führungsklemme (333), wobei die Führungsklemme (333) mit zwei Klemmteilen (3331) versehen ist, eines der zwei Klemmteile (3331) mit dem Führungsblock (332) an einer Seite des Führungsblocks (332) verbunden ist und das andere der zwei Klemmteile (3331) mit dem Führungsblock (332) an einer anderen Seite des Führungsblocks (332) verbunden ist.

7. Drehgestell nach Anspruch 4 bis 6, wobei das sekundäre elastische Element (34) eine Luftfeder ist.

8. Drehgestell nach Anspruch 7, wobei der Achskörper (12) mit einer Gaskammer versehen ist, und eine Oberseite des Achskörpers (12) mit einem Entlüftungsloch versehen ist, das mit der Gaskammer in Verbindung steht; und
wobei eine Unterseite der Luftfeder mit einer Entlüftungsleitung versehen ist, die mit einem inneren Hohlraum der Luftfeder in Verbindung steht, und die Entlüftungsleitung mit dem Entlüftungsloch dadurch in Verbindung steht, dass sie durch den primären Federteller (31) verläuft.

9. Drehgestell nach einem der Ansprüche 1 bis 8, wobei der Drehkranz (35) mit einem Aufnahmeloch (351) zum Aufnehmen eines Zugblocks (71) versehen ist, der an einer Unterseite des Fahrzeugkörpers (7) angeordnet ist, eine obere Oberfläche des Drehkranzes (35) mit einem Sperrring (352) versehen ist, der koaxial zu dem Aufnahmeloch (351) ist, und ein Innendurchmesser des Sperrrings (352) gleich dem Durchmesser des Aufnahmelochs (351) ist.

10. Schienenfahrzeug, **dadurch gekennzeichnet, dass** das Schienenfahrzeug ein Drehgestell nach einem der Ansprüche 1 bis 9 umfasst.

## Revendications

1. Bogie, comprenant :
un essieu (1), dans lequel une partie centrale de l'essieu (1) est évidée vers le bas pour former un espace de réception, et des tourillons (11) sont agencés de manière symétrique au niveau des deux extrémités de l'essieu (1) ;
des roues (2), dans lequel chacune des roues (2) est reliée à un respectif des tourillons (11) par un palier (4) ; et
un dispositif tampon (3) situé dans l'espace de réception, dans lequel le dispositif tampon (3) comprend :
un ensemble de ressort primaire agencé sur l'essieu (1) ;
un ensemble de ressort secondaire agencé sur une partie supérieure de l'ensemble de ressort primaire ; et
une couronne d'orientation (35) agencée sur une partie supérieure de l'ensemble de ressort secondaire et configurée pour être reliée à un corps de véhicule (7) pour transmettre une force de traction ou une force de freinage au corps de véhicule (7),
dans lequel l'essieu (1) comprend :
un corps d'essieu (12) ; et
deux têtes d'essieu (13), dans lequel une des deux têtes d'essieu (13) est agencée au niveau d'une extrémité du corps d'essieu (12), et l'autre des deux têtes d'essieu (13) est agencée au niveau d'une autre extrémité du corps d'essieu (12), les deux têtes d'essieu (13) et le corps d'essieu (12) forment l'espace de réception, et chaque tourillon (11) est agencé sur une surface latérale extérieure d'une extrémité supérieure d'une respective des deux têtes d'essieu (13),
dans lequel l'ensemble de ressort primaire comprend :
une palette à ressort primaire (31) ; et
deux éléments élastiques primaires (32), dans lequel les deux éléments élastiques primaires (32) sont agencés de manière symétrique au niveau des deux extrémités de la palette à ressort primaire (31), et chacun des éléments élastiques primaires (32) est agencé entre la palette à ressort primaire (31) et une respective des têtes d'essieu (13) pour relier la palette à ressort primaire (31) et ladite une respective des têtes d'essieu (13) l'une à l'autre.

2. Bogie selon la revendication 1, dans lequel une surface latérale intérieure de chaque tête d'essieu (13) est pourvue d'un siège de montage à ressort primaire (132), et
dans lequel une extrémité de chaque élément élastique primaire (32) tourné vers ladite tête d'essieu (13) est pourvue d'une partie de montage à ressort primaire (321), et la partie de montage à ressort primaire (321) est reliée au siège de montage à ressort primaire (132).

3. Bogie selon la revendication 1 ou 2, dans lequel une hauteur de montage vertical d'une extrémité de chaque élément élastique primaire (32) pour la liaison à la palette à ressort primaire (31) est inférieure à une hauteur de montage vertical d'une extrémité de chaque élément élastique primaire (32) pour la liaison à ladite tête d'essieu (13).

4. Bogie selon la revendication 1, dans lequel l'ensemble de ressort secondaire comprend :
une palette à ressort secondaire (33), dans lequel chacune des deux extrémités de la palette à ressort secondaire (33) est reliée à une respective des têtes d'essieu (13) ;
un élément élastique secondaire (34) agencé entre la palette à ressort secondaire (33) et la palette à ressort primaire (31).

5. Bogie selon la revendication 4, dans lequel une surface latérale intérieure de chaque tête d'essieu (13) est pourvue d'un siège de montage à ressort secondaire (133), et
dans lequel deux parties de montage à ressort secondaire sont agencées de manière symétrique au niveau des deux extrémités de la palette à ressort secondaire (33), et chacune des deux parties de montage à ressort secondaire est reliée à un respectif des sièges de montage à ressort secondaire (133) et est mobile le long d'une direction verticale par rapport audit un respectif des sièges de montage à ressort secondaire (133).

6. Bogie selon la revendication 5, dans lequel chacun des sièges de montage à ressort secondaire (133) est pourvu d'un trou allongé (1331) s'étendant le long de la direction verticale, et
dans lequel chacune des parties de montage à ressort secondaire comprend :
un bloc de guidage (332), dans lequel le bloc de guidage (322) est reçu dans le trou allongé (1331) et est mobile le long de la direction verticale dans le trou allongé (1331) ; et
une pince de guidage (333), dans lequel la pince de guidage (333) est pourvue de deux parties de serrage (3331), une des deux parties de serrage (3331) est reliée au bloc de guidage (332) au niveau d'un côté du bloc de guidage (332), et l'autre des deux parties de serrage (3331) est reliée au bloc de guidage (332) au niveau de l'autre côté du bloc de guidage (332).

7. Bogie selon l'une quelconque des revendications 4 à 6, dans lequel l'élément élastique secondaire (34) est un ressort pneumatique.

8. Bogie selon la revendication 7, dans lequel le corps d'essieu (12) est pourvu d'une chambre à gaz, et une partie supérieure du corps d'essieu (12) est pourvue d'un trou de mise à l'air libre communiquant avec la chambre à gaz ; et
dans lequel un fond du ressort pneumatique est pourvu d'une ligne de mise à l'air libre communiquant avec une cavité intérieure du ressort pneumatique, et la ligne de mise à l'air libre communique avec le trou de mise à l'air libre en passant à travers la palette à ressort primaire (31).

9. Bogie selon l'une quelconque des revendications 1 à 8, dans lequel la couronne d'orientation (35) est pourvue d'un trou de réception (351) pour recevoir un bloc de traction (71) agencé au niveau d'un fond du corps de véhicule (7), une surface supérieure de la couronne d'orientation (35) est pourvue d'une bague de blocage (352) coaxiale avec le trou de réception (351), et un diamètre intérieur de la bague de blocage (352) est égal à un diamètre du trou de réception (351).

10. Véhicule ferroviaire, **caractérisé en ce que** le véhicule ferroviaire comprend un bogie selon l'une quelconque des revendications 1 à 9.
